# EUROPEAN PATENT SPECIFICATION

(11) **EP 1 274 299 B1**
(45) Date of publication and mention of the grant of the patent: **20.10.2004**
(21) Application number: 01923416.0
(22) Date of filing: 10.04.2001
(51) Int. Cl.: A01K 13/00

(54) **HORSE-RUG**
PFERDEDECKE
COUVERTURE POUR CHEVAL

(30) Priority: 10.04.2000 BE 200000249
(43) Date of publication of application: 15.01.2003
(73) Proprietor: RR Sales and Marketing Advisers bvba, 1600 Sint-Pieters-Leeuw (BE)
(72) Inventor: Van Campenhoudt, Renée, 1600 Sint-Pieters-Leeuw (BE)
(74) Representative: Callewaert, Jean
(86) International application number: PCT/BE2001/000062
(87) International publication number: WO 2001/076358

(56) References cited:
- DE-U- 20 001 080
- DE-U- 29 715 813
- FR-A- 2 552 067
- US-A- 2 110 465
- US-A- 5 271 211

## Description

The invention relates to a horse-rug.

Horse-rug means a mostly rectangular size, relatively thick and mainly padded quilt or quilted coverlet or blanket which covers the horse's back and side-flanks, neck and belly. Horse-rugs are mainly used to cover the horse for insulation against cold, with esthetical means and/or for protection against dirt and changing climatically circumstances.

DE-U-29715813 discloses a horse rug that is made of one part to which other auxiliary parts are releasable attached.

The current sizes and volumes of existing horse-rugs do not allow the easy cleaning by use of a standard household washing machine. These washing machines have generally a volume of 20 to 50 litres and allow a load of maximal 2,5 to 10 kg. Consequently, current horse-rugs do require cleaning by a specialised company (cleaner, dry-cleaner etc. ). This is not only very costly but is in addition very time consuming. The horse-rug has indeed to go back and forth to the cleaner.

The object of the invention is mainly to avoid such inconvenience and to allow easy cleaning in a standard household washing machine.

A further object of the invention is to construct a horse-rug that is easy to handle without affecting the normal properties of the horse-rug such as insulation, waterproof, windproof.

The above mentioned objects are realised by a horse-rug having the specific features set out in claim 1. Specific features for preferred embodiments of the invention are set out in the dependent claims.

The horse-rug, according to an embodiment of the invention, is constructed such that it is dividable in at least two parts, which are divisibly attached together with the aid of connectors.

These connectors enable to connect and disconnect the different parts of the horse-rug. Possible connectors for releasable attaching the different parts of the horse-rug are buttons, push-buttons, zipper fastener and or auto-attaching tape better known under the commercial name Velcro® .

For two parts of the horse-rug, a ratio of size can be defined as being the quotient of the surface area of one part and the surface area of the other part.

The horse-rug consists of mainly two releasable attached parts with approximately identical size, e.g. having a ratio of size of approximately 100 %.

According to a preferred embodiment of the invention, the horse-rug contains two parts wherein the first part covers the shoulders, the front-part of the ribs and side-flanks of the horse and the second part covers the back, the loins, the croup, the rear-part of the ribs and side-flanks of the horse.

According to this preferred embodiment of the invention, the connectors are provided with protectors in order to protect the horse from the solid elements of the connectors and consequently to protect it from injury. These protectors, possibly, comprise a covering overlap extending from one of the parts of the horse-rug that are connected to each other.

Other particularities and advantages of the invention will become clear in the below detailed description of a specific embodiment of the invention. The description is only exemplary and does under no circumstances limit the extent and other embodiments of the invention. The reference numbers have direct reference to the attached figures.
**Figure 1** is a schematic representation of the top-view of a horse-rug according to a preferred embodiment of the invention, wherein two individual parts are releasable attached to each other.
**Figure 2** is a schematic representation of the side-view according to the line II-II of the embodiment as represented in figure 1.
**Figure 3** is a schematic representation of the top-view of the embodiment of the horse-rug as represented in figure 1, wherein the two individual parts are detached from each other.
**Figure 4** is a schematic representation of the side-view according to line IV-IV of figure 3.
**Figure 5** is a schematic representation of the top-view of a horse-rug according to another embodiment of the invention.
**Figure 6** is a schematic representation of the back-view according to line X-X of the embodiment of the horse-rug as represented in figure 5, wherein the two individual parts are releasable attached to each other.
**Figure 7** is a schematic representation of the back-view according to the line X-X of the embodiment as represented in figure 5, wherein the two individual parts are detached from each other.

The same reference numbers in the various figures refer to the same elements.

In general, the current invention relates to a horse-rug comprising parts that are releasable attached together.

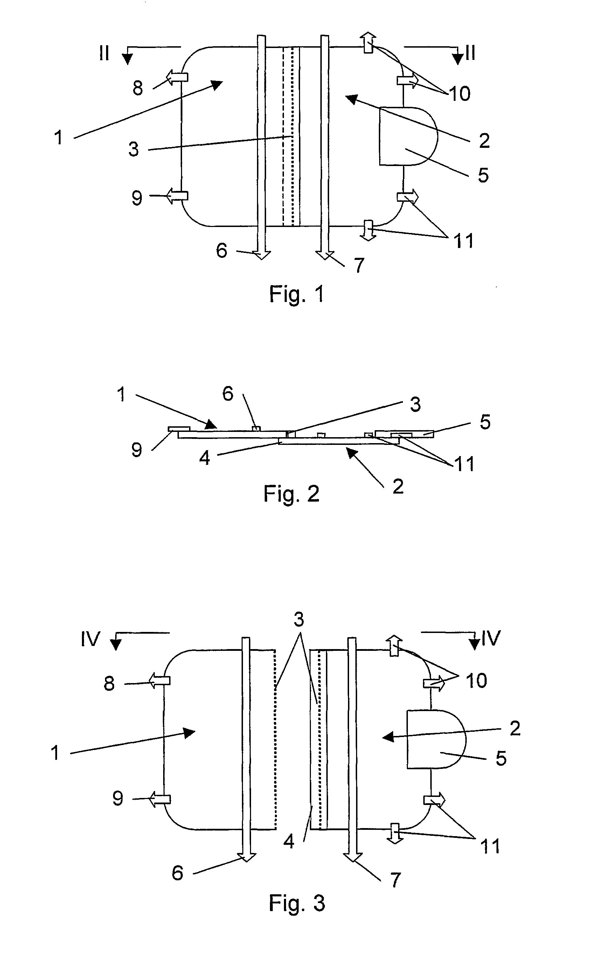

A horse-rug, according to a preferred embodiment of the invention, comprises two parts, a first part 1 and a second part 2, as represented in figures 1 and 2.

The first part 1 is the front-part of the horse-rug and the second part 2 is the rear-part. Both parts are releasable attached together by connectors 3, which may comprise buttons, push-buttons, zipper fastener or auto-attaching tape better know under the commercial name Velcro® .

Parts 1 and 2 have approximately the same size resulting in a ratio of size of part 1 to part 2 of approximately 100 %.

The front-part 1 is stretching from the horse's neck towards, for instance, almost near the middle of the horse's back. The rear-part 2 stretches from the middle of the horse's back towards the horse's tail. In this respect, the connectors 3 are arranged in such a way that when the horse-rug is properly put onto a horse, these connectors 3 are extending along a direction, which is transversal to the horse's backbone. More specifically, these connectors 3 are aligned almost perpendicular to the horse's backbone.

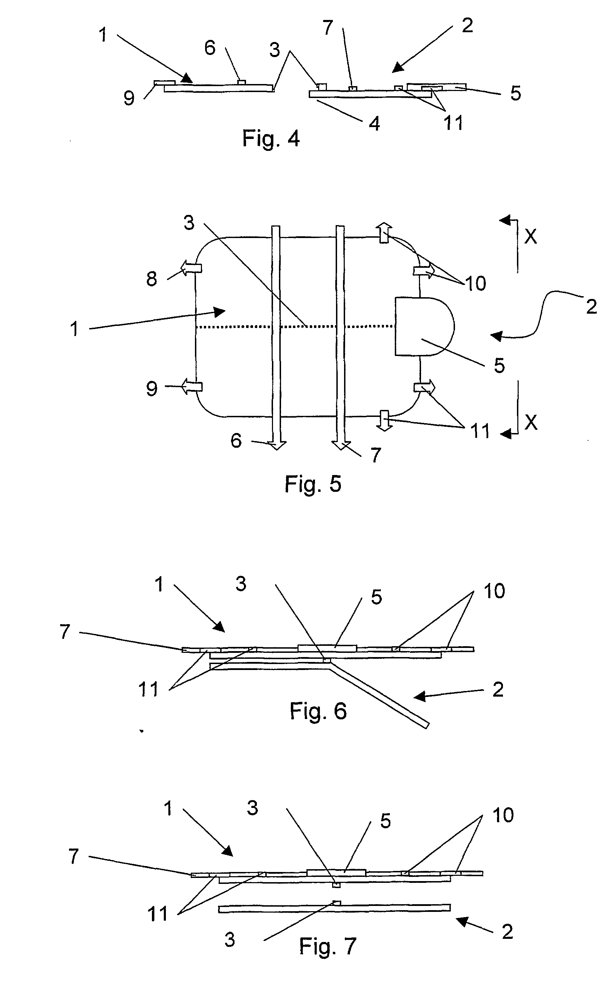

By detaching the connectors 3, two independent parts 1 and 2 of the horse-rug are obtained, as represented in figures 3 and 4.

An overlap 4 reaches out from underneath the connectors 3 from the rear-part 2 and protects the horse against pressure from possible solid elements of the connectors as represented in figures 2 and 4.

On the rear-part 2 of the horse-rug, a tail-protection part 5 covers and protects the horse's tail.

Furthermore, on each of the parts 1 and 2 a belt with a buckle 6, respectively 7, is attached to the horse-rug in order to attach the latter sideways against the horse's belly. More specifically, these belts 6 and 7 are positioned around the horse's belly.

In an analogue way, there are two fastenings 8 and 9 foreseen on the front-part 1 of the horse-rug in order to maintain this part in position around the horse's neck.

In a similar analogue way, there are two fastenings 10 and 11 foreseen on the rear-part 2, to be attached around the horse's rear-legs, in order to maintain this part in position at the rear-end.

Because the horse-rug comprises two parts, namely parts 1 and 2, these can not only be fitted separately into a household washing machine in order to be easily cleaned but can also be manageable stored. This results from the fact that, in the case of the above preferred embodiment of horse-rug according to the invention, the parts 1 and 2 have a reduced surface, which is 50 % of the surface of the complete horse-rug, and also a reduced volume, which is 50 % of the volume of the complete horse-rug if the density of both parts 1 and 2 is the same.

Another interesting embodiment of a horse-rug according to the invention, comprises two parts 1 and 2 with nearly identical shape and size, which can be releasable attached together such that the first part 1 completely overlaps the second part 2 as represented in figures 5, 6 and 7.

The first part 1 is the upper-part while the second part 2 is the lower-part of the horse-rug. In this case the ratio of size of part 1 to part 2 is 100 %.

Both parts 1 and 2 extend from the horse's neck towards the horse's tail.

The upper-part 1 and the lower-part 2 are releasable connected by connectors 3, which are located between the parts 1 and 2, in the middle of the parts 1 and 2, and parallel with the horse's backbone. When the horse-rug is positioned onto the horse, the connectors 3 are aligned above the horse's backbone.

Furthermore, as in the above preferred embodiment, fastenings 6 to 11 are provide in order to attach the horse-rug onto the horse.

In the case of the above interesting embodiment of the invention, the parts 1 and 2 have the same surface area as the complete horse-rug but these have a reduced volume, which is 50 % of the volume of the complete horse-rug if the density of both parts is the same. Both parts can easier be handled and stored compared to the complete horse-rug since the volume and also the weight are reduced.

Within the framework of the invention as defined in the appended claims, several alternative embodiments can be considered such as the number of detachable parts, the design of the detachable parts, the way of connecting the detachable parts as well as the position of the detachable parts in relation to each other. As such, the horse-rug can consist of more than two parts, which are releasable attached together.

## Claims

1. Horse-rug that covers the horse's back and its side-flanks, and that comprises at least two parts, a first part (1) and a second part (2), and connectors (3) for releasable attaching said parts **characterised in that** the parts (1, 2) are attached to each other and extending in prolongation of each other, and that these parts (1, 2) have approximately the same size.

2. Horse-rug according to claim 1, wherein said first part (1) is a front-part and said second part (2) is a rear-part.

3. Horse-rug according to claim 1 or 2, wherein one of said parts (1, 2) comprises at least two subparts and connectors (3) for releasable attaching these subparts to each other.

4. Horse-rug according to one of the claims 1 to 3, wherein said connectors (3) are extending along a direction which is transverse to the horse's backbone.

5. Horse-rug according to one of the claims 1 to 4, wherein said first part (1) covers the shoulders, the front-part of the ribs and side-flanks of the horse and said second part (2) covers the back, the loins, the croup, the rear-part of the ribs and side-flanks of the horse.

6. Horse-rug according to one of the claims 1 to 5, wherein said connectors (3) are provided with protectors (4) for protecting the horse from injury.

7. Horse-rug according to claim 6, wherein said protectors (4) comprise an overlap extending from one of the parts that are connected to each other by means of said connectors (3).

8. Horse-rug according to one of the claims 1 to 7, wherein said connectors (3) are selected from the group consisting of buttons, push-buttons, zipper fastener and/or auto-attaching tape.

## Revendications

1. Couverture de cheval qui recouvre le dos du cheval et ses flancs, et qui comprend au moins deux parties, une première partie (1) et une seconde partie (2), et des connexions (3) pour fixer lesdites parties de manière amovible, **caractérisée en ce que** les parties (1,2) sont attachées l'une à l'autre dans le prolongement l'une de l'autre, et que ces parties (1,2) ont approximativement la même dimension.

2. Couverture de cheval suivant la revendication 1, dans laquelle ladite première partie (1) est une partie avant et ladite deuxième partie (2) est une partie arrière.

3. Couverture de cheval suivant la revendication 1 ou 2, dans laquelle une desdites parties (1,2) comprend au moins deux subparties et des connexions (3) pour fixer de manière amovible ces subparties l'une à l'autre.

4. Couverture de cheval suivant l'une quelconque des revendications 1 à 3, dans laquelle lesdites connexions (3) s'étendent suivant une direction transversale à la colonne vertébrale du cheval.

5. Couverture de cheval suivant l'une quelconque des revendications 1 à 4, dans laquelle ladite première partie (1) couvre les épaules, la partie avant des côtes et les flancs du cheval et ladite seconde partie (2) couvre le dos, les reins, la croupe, la partie arrière des côtes et les flancs du cheval.

6. Couverture de cheval suivant l'une quelconque des revendications 1 à 5, dans laquelle lesdites connexions (3) sont pourvues de protecteurs pour protéger le cheval contre des blessures.

7. Couverture de cheval suivant la revendication 6, dans laquelle lesdits protecteurs (4) comprennent un recouvrement s'étendant à partir d'une des parties qui sont connectées l'une à l'autre au moyen desdites connexions (3).

8. Couverture de cheval suivant l'une quelconque des revendications 1 à 7, dans laquelle lesdites connexions (3) sont choisies du group consistant de boutons, boutons à pression, tirettes et/ou ruban autocollant.

## Patentansprüche

1. Eine Pferdedecke die den Rücken und Weichen des Pferdes bedeckt, und die wenigstens besteht aus zwei Teilen, einem ersten Teil (1) und einem zweiten Teil (2), und Verbindungsgliedern (3) um die genannten Teile trennbar festzumachen, **dadurch gekennzeichnet, daß** die Teile (1,2) aneinander festgemacht worden sind und sich in eine Linie erstrecken, und ungefähr dieselbe Größe haben.

2. Pferdedecke nach Anspruch 1 wobei genannter erster Teil (1) ein Vorderteil und genannter zweiter Teil (2) ein Hinterteil ist.

3. Pferdedecke nach Anspruch 1 oder 2, wobei eins der genannten Teile (1, 2) wenigstens zwei Subteile und Verbindungsglieder (3) umfaßt um diese Subteile trennbar aneinander festzumachen.

4. Pferdedecke nach einem der Ansprüche 1 bis 3, wobei die genannten Verbindungsglieder (3) sich in eine Richtung erstrecken die quer auf der Wirbelsäule des Pferdes steht.

5. Pferdedecke nach einem der Ansprüche 1 bis 4, wobei der genannte erste Teil (1) die Schultern, die Vorderteile des Brustkorbs und der Weichen des Pferdes bedeckt, und der genannte zweite Teil (2) den Rücken, die Lenden, die Kruppe und die Hinterteile des Brustkorbs und der Weichen bedeckt.

6. Pferdedecke nach einem der Ansprüche 1 bis 5, wobei die genannten Verbindungsglieder (3) ausgestattet worden sind mit Beschützungen (4) um das Pferd gegen Verletzungen zu schützen.

7. Pferdedecke nach Anspruch 6, wobei die genannten Beschützungen (4) eine Überlappung umfassen die sich aus einem der Teile, die mit Hilfe der Verbindungsglieder (3) miteinander verbunden sind, ergibt.

8. Pferdedecke nach einem der Ansprüche 1 bis 7, wobei die genannten Verbindungsglieder (3) gewählt worden sind aus der Gruppe bestehend aus Knöpfen, Druckknöpfen, Reißverschlüssen und/oder selbsthaftenden Klebestreifen.
